# EUROPÄISCHE PATENTSCHRIFT

(11) **EP 4 054 792 B1**
(45) Veröffentlichungstag und Bekanntmachung des Hinweises auf die Patenterteilung: **23.07.2025**
(21) Anmeldenummer: 20837923.0
(22) Anmeldetag: 08.11.2020
(51) Int. Cl.: B23Q 7/05, B23Q 39/04, B25J 9/00, B27M 1/08

(54) **FERTIGUNGSZELLE MIT MINDESTENS ZWEI BEARBEITUNGSROBOTERN**
PRODUCTION CELL WITH AT LEAST TWO MACHINING ROBOTS
CELLULE DE FABRICATION POURVUE D'AU MOINS DEUX ROBOTS D'USINAGE

(30) Priorität: 10.11.2019 DE 102019007763
(43) Veröffentlichungstag der Anmeldung: 14.09.2022
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2020/000272
(87) Internationale Veröffentlichungsnummer: WO 2021/089074

(56) Entgegenhaltungen:
- EP-A1- 1 810 803
- EP-A1- 2 153 955
- DE-A1- 102017 104 246

## Beschreibung

Die Erfindung betrifft eine Fertigungszelle mit einer Werkstückbereitstellung, mit einer mit dieser verbundenen Werkzeugmaschine und mit mindestens einer einen Werkstückbereitstellungsbereich der Werkstückbereitstellung und einen Werkstücktisch der Werkzeugmaschine aufweisenden Werkstückbahn, wobei die Werkzeugmaschine mindestens zwei Bearbeitungsroboter aufweist und wobei der Werkstücktisch mindestens eine Blocksaugergruppe umfasst.

Aus der DE 10 2017 104 246 A1 ist eine Fertigungszelle bekannt. Die Werkstückbearbeitung erfolgt in einer Werkstückaufspannung mittels zweier Bearbeitungsroboter.

Die EP 1 810 803 A1 offenbart eine Werkzeugmaschine mit zwei Bereitstellungs- und Ausrichtbereichen und mit jeweils einem einzeln relativ hierzu verfahrbaren Werkstücktisch. Das einzelne Werkstück wird mittels einer Handhabungsvorrichtung oder von Hand aus dem Bereitstellungsbereich auf den Werkstücktisch gehoben.

Nach der EP 2 153 955 A1 sollen in Längs- und Querrichtung verstellbare Blocksauger zur Werkstückfixierung eingesetzt werden. Alle Blocksauger bilden eine gemeinsame Ebene. An jedem Blocksauger ist eine Hubrolle angeordnet, um das Rohteil zur Weiterbearbeitung vom abgetrennten Teil zu beabstanden.

Der vorliegenden Erfindung liegt die Problemstellung zugrunde, die Ausbringungsrate einer Fertigungszelle zu erhöhen und ihre Bearbeitungsmöglichkeiten zu erweitern.

Diese Problemstellung wird mit den Merkmalen des Hauptanspruches gelöst. Dazu weist die Fertigungszelle eine zweite, in einer Längsrichtung der Fertigungszelle und parallel zur ersten Werkstückbahn verlaufende zweite Werkstückbahn mit einem zweiten, mindestens eine Blocksaugergruppe umfassenden Werkstücktisch auf. Außerdem ist jede Blocksaugergruppe zur werkstückspezifischen Anordnung in der Längsrichtung der Fertigungszelle verfahrbar. Die einzelne Blocksaugergruppe weist mindestens zwei Saugelemente auf, die einzeln in einer Höhenrichtung verfahrbar sind. Außerdem hat die einzelne Blocksaugergruppe einen Tragbalken, an dem eine Stützvorrichtung mit einer eine querliegende Stützrolle tragenden Hubvorrichtung angeordnet ist.

Die beschriebene Fertigungszelle ermöglicht die Bearbeitung einer Vielzahl von Werkstücken mit unterschiedlicher geometrischer Ausbildung und unterschiedlicher Anordnung von Bearbeitungsbereichen und Werkstückdurchbrüchen. Die werkstückspezifische Anordnung der Blocksaugergruppen relativ zur Längsrichtung der Fertigungszelle ermöglicht es, eine Beschädigung der Blocksaugergruppen bei einer spanenden Werkstückbearbeitung zu vermeiden. Außerdem können die Bereitstellung eines nachfolgenden Werkstücks sowie sein Transport auf den Werkstücktisch bereits während der Bearbeitung eines ersten Werkstücks erfolgen. Hierdurch kann ein hoher Nutzungsgrad der Fertigungszelle auch bei einer Losgröße eins erreicht werden.

Weitere Einzelheiten der Erfindung ergeben sich aus den Unteransprüchen und der nachfolgenden Beschreibung schematisch dargestellter Ausführungsformen.
- Figur 1:: Fertigungszelle;
- Figur 2:: Werkstückbereitstellung;
- Figur 3:: Querschubvorrichtung;
- Figur 4:: Anschlagsleiste;
- Figur 5:: Werkstückwagen;
- Figur 6:: Werkzeugmaschine ohne Bearbeitungsroboter;
- Figur 7:: Blocksaugergruppe.

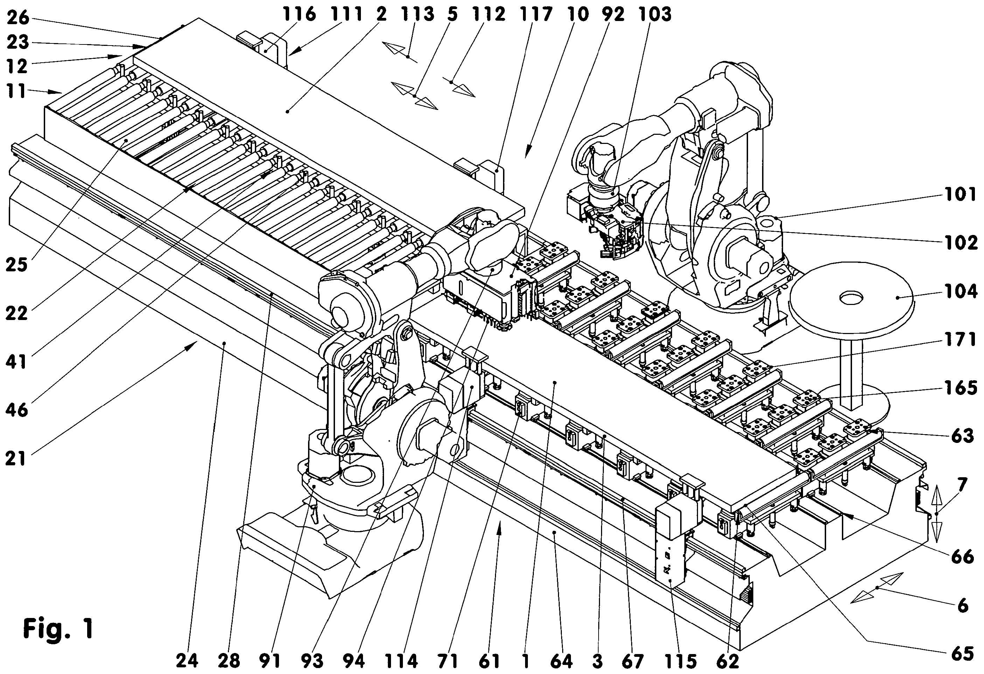

Die Figuren 1 - 7 zeigen eine Fertigungszelle (10) und einige Baugruppen dieser Fertigungszelle (10). Die Fertigungszelle (10) umfasst eine Werkstückbereitstellung (21) und eine mit der Werkstückbereitstellung (21) verbundene Werkzeugmaschine (61). In der Werkstückbereitstellung (21) werden die z.B. mittels eines Handhabungsgeräts oder manuell geladenen Werkstücke (1; 2) ausgerichtet und von einer Fördervorrichtung (111) der Fertigungszelle (10) übernommen. Mittels der Fördervorrichtung (111) werden die Werkstücke (1; 2) anschließend von der Werkstückbereitstellung (21) zur Werkzeugmaschine (61) und nach der Bearbeitung zu einer Werkstückentnahme gefördert. Im Ausführungsbeispiel erfolgt die Werkstückentnahme nach der Bearbeitung in der Werkstückbereitstellung (21). Es ist aber auch denkbar, die jeweilige Werkstückentnahme räumlich getrennt von der Werkstückbereitstellung (21) anzuordnen. Der Transport des Werkstücks (1; 2) von der Werkstückbereitstellung (21) zur Werkzeugmaschine (61) erfolgt in einer ersten Förderrichtung (112). Zur Entnahme wird das Werkstück (1; 2) in dem dargestellten Ausführungsbeispiel in einer entgegen dieser ersten Förderrichtung (112) gerichteten zweiten Förderrichtung (113) transportiert. Die Förderrichtungen (112, 113) sind in der Längsrichtung (5) der Fertigungszelle (10) orientiert. Es ist auch denkbar, das bearbeitete Werkstück (1; 2) in der Förderrichtung (112) weiter zu transportieren. Beispielsweise liegt dann die Werkstückentnahme oder eine weitere Fertigungsstation einer verketteten Fertigung auf der der Werkstückbereitstellung (21) abgewandten Seite der Werkzeugmaschine (61).

Die Fertigungszelle (10) hat zwei nebeneinanderliegende, parallel zueinander in der Längsrichtung (5) orientierte Werkstückbahnen (11, 12). In der Werkstückbereitstellung (21) hat jede dieser Werkstückbahnen (11; 12) einen Werkstückbereitstellungsbereich (22; 23). Weiterhin hat die einzelne Werkstückbahn (11; 12) in der Werkzeugmaschine (61) einen Arbeitsbereich (62; 63) sowie jeweils einem Werkstücktisch (65; 165). Der jeweilige Arbeitsbereich (62; 63) ist der Raumbereich, in dem das einzelne Werkstück (1; 2) mit der jeweils bearbeitenden Werkzeugeinheit (92; 102) zusammenwirkt.

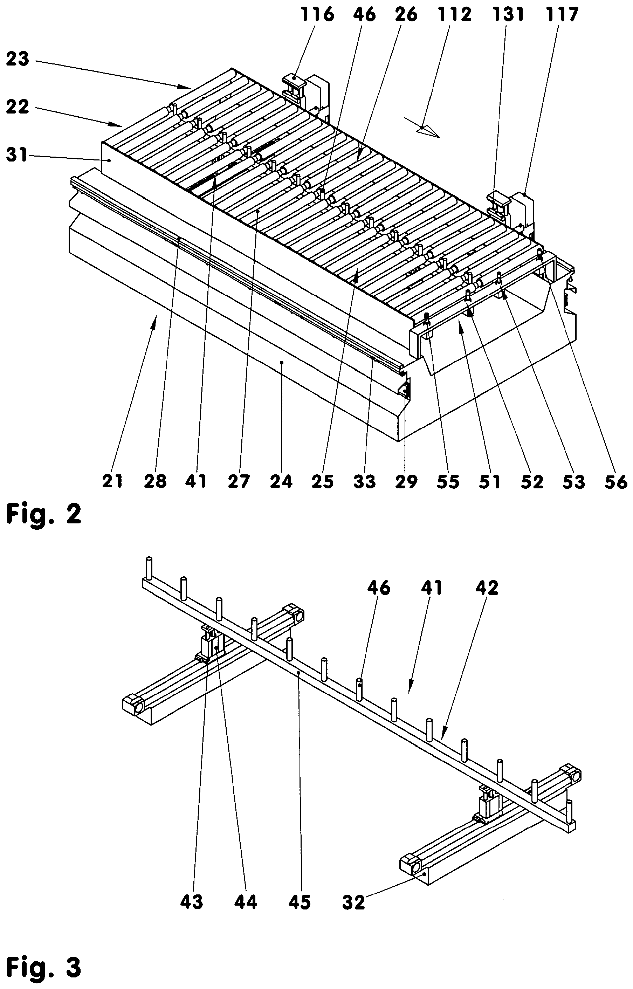

Die Werkstückbereitstellung (21), vgl. Figur 2, umfasst im Ausführungsbeispiel ein Bett (24), das zwei nebeneinanderliegende Tragrollenbahnen (25, 26), eine Querschubvorrichtung (41) und zwei beispielsweise auf einer gemeinsamen Anschlagleiste (51) sitzende Anschlagvorrichtungen (52, 53) trägt. Das Bett (24) hat außenliegende Werkstückwagen-Führungsschienen (28) und Leiterbahnen (29). Die Werkstückwagen-Führungsschienen (28) und die Leiterbahnen (29) setzen sich am Maschinenbett (64) der Werkzeugmaschine (61) fort. Entlang der Werkstückwagen-Führungsscheinen (28) sind Werkstückwagen (114 - 117) der Fördervorrichtung (111) verfahrbar. Die Fördervorrichtung (111) umfasst im Ausführungsbeispiel pro Werkstückbahn (11; 12) zwei Werkstückwagen (114, 115; 116, 117). Die Energieversorgung und Steuerung der selbstfahrenden Werkstückwagen (114 - 117) erfolgt mittels der Leiterbahnen (29).

Die einzelne Tragrollenbahn (25; 26) umfasst mehrere quer zur Förderrichtung (112) und parallel zueinander liegende Tragrollen (27). Diese können starr ausgebildet oder z.B. wälzgelagert auf einer starren Achse angeordnet sein. Im Ausführungsbeispiel sind alle Tragrollen (27) identisch zueinander ausgebildet. Die Breite der einzelnen Tragrolle (27) ist im Allgemeinen größer oder gleich der maximalen Breite eines zu bearbeitenden Werkstücks (1; 2) in der Querrichtung (6). Die Tragrollen (27) überragen die seitlichen, in Längsrichtung (5) orientierten Tragrollenträger (31) in der Höhenrichtung (7).

In der Figur 3 ist eine Querschubvorrichtung (41) dargestellt. Im Ausführungsbeispiel hat diese einen in Querrichtung (6) verfahrbaren Rechen (42). Die Querschubvorrichtung (41) hat zwei im Bett (24) verankerte Querführungen (32), die jeweils einen relativ hierzu verfahrbaren Querschlitten (43) tragen. Der Hub der Querschlitten (43) in der Querrichtung (6) ist z.B. um 40 % größer als die Breite einer Tragrollenbahn (25; 26) in dieser Richtung. Die beiden Querschlitten (43) sind beispielsweise synchron zueinander angetrieben. Auf jedem der Querschlitten (43) sitzt eine Hubvorrichtung (44), die auf einen höhenverstellbaren, in Längsrichtung (5) orientierten Zinkenträger (45) des Rechens (42) wirkt. Beide z.B. hydraulisch betätigten Hubvorrichtungen (44) sind hierbei gekoppelt, sodass der Zinkenträger (45) immer waagerecht steht. Aus dem Zinkenträger (45) ragen nach oben Zinken (46) heraus. Die Zinken (46) sind im Ausführungsbeispiel zylindrische Zapfen. Bei montiertem und angehobenem Rechen (42) stehen die Zinken (46) z.B. zwischen zwei Tragrollen (27) einer Tragrollenbahn (25; 26). Die Hubvorrichtungen (44) sind so ausgebildet, dass bei ausgefahrenen Zinken (46) diese um 70 % des Hubes die Tragebene der Tragrollenbahn (25; 26) überragen. Bei abgesenkter Hubvorrichtung (44) sind die Zinken (46) unterhalb der Tragebene der Tragrollenbahn (25; 26) versenkt. Die die Oberseite der Tragrollenbahn (25; 26) tangierende Tragebene der Tragrollenbahn (25; 26) wird im Folgenden auch als Förderebene der Fertigungszelle (10) bezeichnet. Anstatt eines Rechens (42) kann die Querschubvorrichtung (41) auch einen Schwenkhebel, einen Schubkeil, etc. aufweisen.

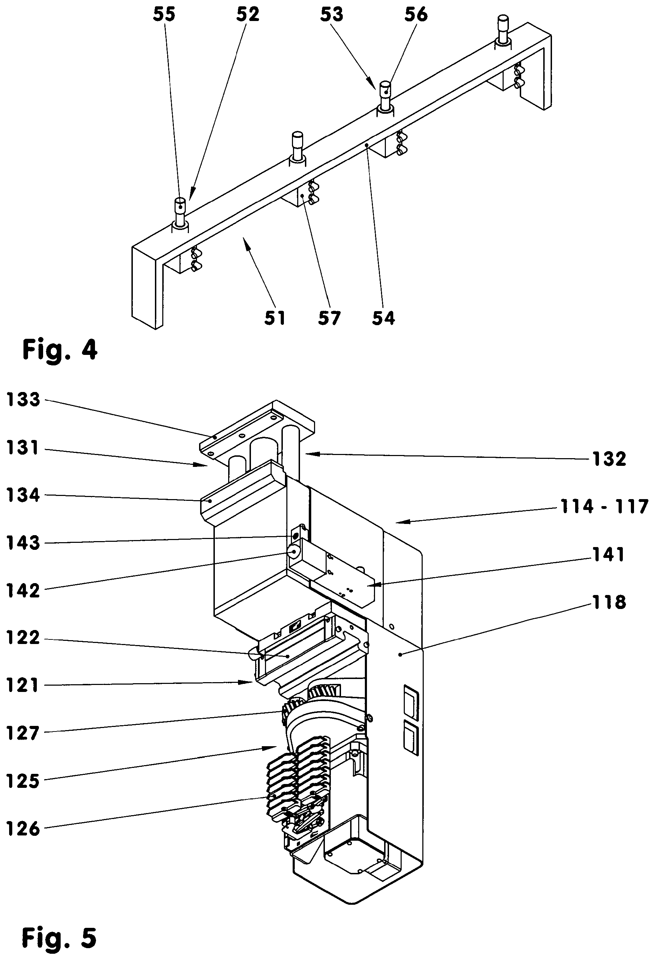

Die Figur 4 zeigt eine Anschlagleiste (51). Diese ist in der Querrichtung (6) orientiert und an dem der Werkzeugmaschine (61) zugewandten Ende der Werkstückbereitstellung (21) angeordnet. Die Anschlagleiste (51) hat einen Zapfenträger (54), der zwei Anschlagvorrichtungen (52, 53) mit jeweils zwei Anschlagzapfen (55; 56) trägt. Jeder Anschlagzapfen (55; 56) ist mittels eines doppeltwirkenden Zylinders (57) zwischen einer eingefahrenen und einer ausgefahrenen Stellung verstellbar. In der dargestellten ausgefahrenen Stellung überragen die Anschlagzapfen (55, 56) mit einer Höhe von 85 % ihres Vertikalhubs die Förderebene. In der eingefahrenen Stellung liegen die Anschlagzapfen (55, 56) unterhalb der Förderebene. Die Hubverstellung der hydraulischen Zylinder (57) erfolgt z.B. gruppenweise pro Anschlagvorrichtung (52; 53).

In der Figur 5 ist ein Werkstückwagen (114; 115; 116; 117) dargestellt. Die im Ausführungsbeispiel dargestellte Fertigungszelle (10) verfügt über vier gleichartige Werkstückwagen (114 - 117). Zwei dieser Werkstückwagen (114, 115) sind entlang der in der Förderrichtung (112) gesehenen rechten Seite der Fertigungszelle (10) geführt, die zwei anderen Werkstückwagen (116, 117) sind entlang der linken Seite geführt. Es können auch mehr oder weniger als die dargestellte Anzahl der Werkstückwagen (114 - 117) eingesetzt werden. Beispielsweise kann pro Werkstückbahn (11; 12) ein einzelner Werkstückwagen (114; 115; 116; 117) eingesetzt werden.

Der einzelne Werkstückwagen (114; 115; 116; 117) verfügt über eine Führungseinheit (121), eine Antriebseinheit (125) und eine Greifeinheit (131). Die genannten Einheiten (121, 125, 131) sind in einem Gehäuse (118) integriert. An der Außenseite des Gehäuses (118) ist im Ausführungsbeispiel eine Andockkupplung (141) angeordnet.

Die Führungseinheit (121) umfasst einen Kugelumlaufschuh (122), der bei montiertem Werkstückwagen (114; 115; 116; 117) die Werkstückwagen-Führungsschiene (28) der Werkstückbereitstellung (21) und/oder die Werkstückwagen-Führungsschiene (67) Werkzeugmaschine (61) umgreift. Die Werkstückwagen-Führungsschienen (28, 67) sind hierbei in der Längsrichtung (5) orientiert auf dem Bett (24) der Werkstückbereitstellung (21) bzw. auf dem Maschinenbett (64) der Werkzeugmaschine (61) befestigt.

Die Antriebseinheit (125) verfügt über eine Energie- und Signalversorgung (126). Diese liegt bei montiertem Werkstückwagen (114; 115; 116; 117) federbelastet an den Leiterbahnen (29) des Betts (24) bzw. des Maschinenbetts (64) an. Ein im Werkstückwagen (114; 115; 116; 117) angeordneter Antriebsmotor treibt ein Antriebsrad (127) an, das bei montiertem Werkstückwagen (114; 115; 116; 117) mit einer seitlich am Bett (24) bzw. am Maschinenbett (64) befestigten Zahnstange (33) kämmt.

Die Greifeinheit (131) ist oberhalb der Führungseinheit (121) angeordnet. Sie umfasst eine Parallelgreifvorrichtung (132) mit zwei relativ zueinander beweglichen Klemmbacken (133, 134). Im Ausführungsbeispiel sind beide Klemmbacken (133, 134) relativ zum Gehäuse (118) des Werkstückwagens (114; 115; 116; 117) verfahrbar. Die Öffnungs- und die Schließrichtung der Parallelgreifvorrichtung (132) ist in der Höhenrichtung (7) orientiert. Auch eine Höhenverstellung der gesamten Greifeinheit (131) relativ zur Führungseinheit (121) ist denkbar. Hierbei können auch beide Klemmbacken (133, 134) einzeln angetrieben höhenverstellbar sein.

Die Greifeinheit (131) kann auch asymmetrisch ausgebildet sein. So kann beispielsweise die untere Klemmbacke (134) einen geringeren Hub aufweisen als die obere Klemmbacke (133).

Die Andockkupplung (141) hat beispielsweise einen ausfahrbaren Stößel (142) und einen Stecker (143). Der Stecker (143) kann zur Übertragung elektrischer Energie, von Daten und/oder von Medien z.B. Druckluft für pneumatische Funktionen eingesetzt werden. An die Andockkupplung (141) ist im Ausführungsbeispiel eine Blocksaugergruppe (71; 171) der Werkzeugmaschine (61) ankuppelbar. Der einzelne Werkstückwagen (114; 115; 116; 117) kann auch ohne die Andockkupplung (141) ausgebildet sein.

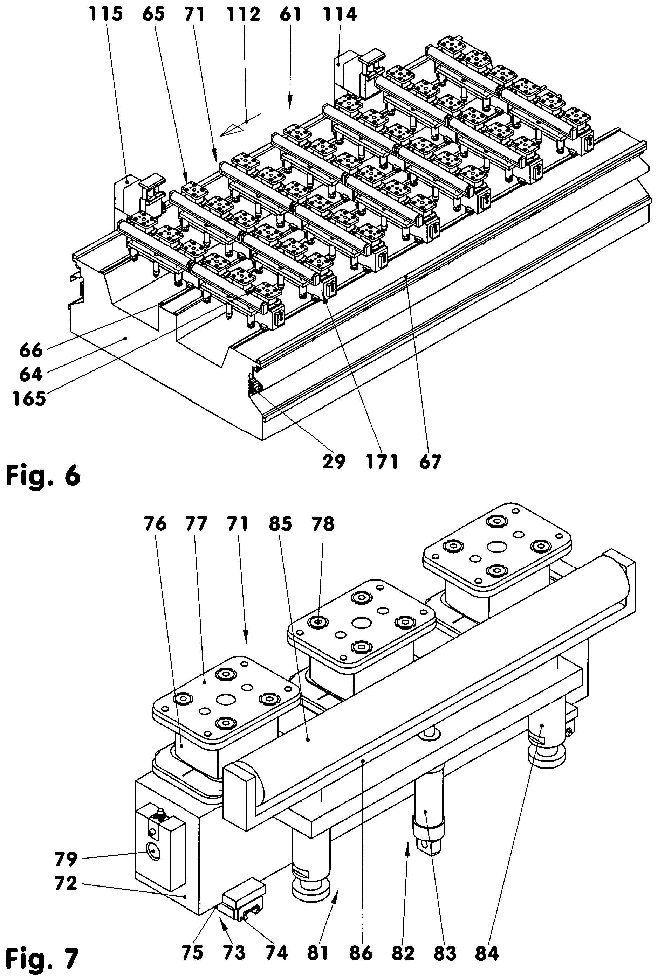

Die Figur 6 zeigt die Werkzeugmaschine (61) der Fertigungszelle (10) ohne Bearbeitungsroboter (91, 101). In dem Maschinenbett (64) sind zwei Werkstücktische (65, 165) nebeneinander angeordnet. Jeweils eine der Werkstücktische (65; 165) ist einer der Werkstückbahnen (11; 12) zugeordnet. Die Trennfuge der beiden Werkstücktische (65, 165) verläuft in der vertikalen Mittenlängsebene des Maschinenbetts (64). Jeder der Werkstücktische (65; 165) umfasst mindestens eine Blocksaugergruppe (71; 171). Im Ausführungsbeispiel hat jeder Werkstücktisch (65; 165) mehrere Blocksaugergruppen (71; 171). Die einzelnen Blocksaugergruppen (71; 171) sind in der Längsrichtung (5) verfahrbar im Maschinenbett (64) geführt. Das Maschinenbett (64) hat hierfür in der Längsrichtung (5) orientierte Blocksauger-Führungsbahnen (66). Weiterhin kann im Maschinenbett (64) eine Spanabfuhrvorrichtung angeordnet sein.

In der Figur 7 ist eine Blocksaugergruppe (71; 171) dargestellt. Alle Blocksaugergruppen (71; 171) sind beispielsweise gleichartig aufgebaut. Hierbei sind,die Blocksaugergruppen (71) der ersten Werkstückbahn (11) spiegelbildlich zu den Blocksaugergruppen (171) der zweiten Werkstückbahn (12) ausgebildet. Die einzelne Blocksaugergruppe (71; 171) hat einen Tragbalken (72) mit zwei Führungsgruppen (73) zur Führung entlang des Maschinenbetts (64). Die einzelne Führungsgruppe (73) hat zwei in der Längsrichtung (5) voneinander beabstandete Führungsschuhe (74), zwischen denen eine hydraulisch oder pneumatisch lösbare Klemmvorrichtung (75) sitzt. Diese z.B. federbelastet schließende Klemmvorrichtung (75) sichert die Lage der Blocksaugergruppe (71; 171) relativ zum Maschinenbett (64) in der Längsrichtung (5).

Der Tragbalken (72) ist in der Querrichtung (6) orientiert. Er trägt beispielsweise drei nebeneinandersitzende Saugelemente (76). Diese haben eine annährend rechteckige Ansaugfläche (77) mit vier Saugnäpfen (78). Die Saugelemente (76) sind im Ausführungsbeispiel einzeln höhenverstellbar ausgebildet. Sie können aber auch starr ausgebildet sein. Jedes Saugelement (76) und/oder jeder Saugnapf (78) ist einzeln mit Unterdruck ansteuerbar.

Am Tragbalken (72) ist eine Stützvorrichtung (81) angeordnet. Diese Stützvorrichtung (81) hat eine Hubvorrichtung (82), die einen zentralen Hubzylinder (83) und zwei Führungszylinder (84) aufweist. Die Hubvorrichtung (82) trägt eine querliegende Stützrolle (85). Die Stützrolle (85) ist beispielsweise in einem U-förmigen Stützträger (86) drehbar gelagert. Die Hubvorrichtung (82) ist derart ausgebildet, dass die parallel zur Förderebene liegende, die obenliegende Mantellinie der Stützrolle (85) tangierende Stützebene von einer unterhalb der Ansaugfläche (77) liegenden Bereitschaftslage in eine oberhalb der Ansaugfläche (77) liegende Stützlage verstellbar ist.

An der Stirnseite des Tragbalkens (72) ist eine Tragbalkenkupplung (79) angeordnet. Diese ist beispielsweise komplementär zur Andockkupplung (141) der Werkstückwagen (114 - 117) ausgebildet.

Auf jeder Seite der Werkzeugmaschine (61) ist jeweils ein Bearbeitungsroboter (91; 101) angeordnet. Jeder dieser Bearbeitungsroboter (91; 101) trägt eine Werkzeugeinheit (92; 102). Der in der Förderrichtung (112) rechte Bearbeitungsroboter (91) trägt in der Darstellung der Figur 1 als Werkzeugeinheit (92) ein Bohr- und Fräsaggregat (92). Ein Werkzeug (94) dieses Bohr- und Fräsaggregats (92) ist beispielsweise ein Bohrwerkzeug (94). Der in der Förderrichtung (112) links stehende Bearbeitungsroboter (101) ist im Ausführungsbeispiel mit einem Verleimaggregat (102) beispielsweise zum Fügen einer Werkstückbeschichtung ausgerüstet. Es ist auch denkbar, in der Werkzeugmaschine (61) mehr als zwei Bearbeitungsroboter (91; 101) einzusetzen.

Jeder der dargestellten Bearbeitungsroboter (91; 101) kann Werkstücke (1, 2) auf beiden Werkstückbahnen (11, 12) bearbeiten. Der einzelne Bearbeitungsroboter (91; 101) kann hierfür einen Mehrfach-Teleskoparm aufweisen. Auch ist es denkbar, den einzelnen Bearbeitungsroboter (91; 101) in der Längsrichtung (5) und/oder in der Querrichtung (6) relativ zum Maschinenbett (64) zu verfahren.

Der einzelne Bearbeitungsroboter (91; 101) hat im Ausführungsbeispiel mindestens eine in der Höhenrichtung (7) orientierte vertikale Schwenkachse sowie mindestens eine parallel zum Werkstücktisch (65; 165) orientierte horizontale Schwenkachse. Weiterhin hat die jeweilige Werkzeugeinheit (92; 102) einen mehrachsig ausgebildeten Schwenkkopf (93; 103). Auch eine andere Ausbildung der kartesischen Achsen und/oder der Schwenkachsen der Bearbeitungsroboter (91; 101) ist denkbar.

An der Werkzeugmaschine (61) ist weiterhin ein Kantenleimer (104) angeordnet. Hiermit können die Kanten des Werkstücks (1; 2) beschichtet werden.

In der Fertigungszelle (10) ist beispielsweise zunächst in der Werkstückbereitstellung (21) kein Werkstück (1; 2) bereitgestellt. Mindestens zwei Werkstückwagen (114, 115; 116, 117) stehen einseitig im Bereich der Werkstückbereitstellung (21). Die Greifeinheiten (131) dieser Werkstückwagen (114, 115; 116, 117) sind geöffnet. Der Rechen (42) der Querschubvorrichtung (41) ist abgesenkt. Ein erstes Werkstück (1; 2) wird z.B. mittels einer Hallenfördervorrichtung in der Werkstückbereitstellung (21) abgelegt. Dieses erste Werkstück (1; 2) ist z.B. plattenförmig ausgebildet. Es besteht beispielsweise aus Holz, Kunststoff, Aluminium, Stahl, einem Verbundwerkstoff, etc. Das abgelegte Werkstück (1; 2) wird beim Ablegen z.B. nur grob orientiert. Beispielsweise kann die Werkstücklängsrichtung um 30 Grad von der Längsrichtung (5) der Fertigungszelle (10) abweichen.

Nach dem Ablegen des ersten Werkstücks (1; 2) verfährt der Rechen (42) in der Querrichtung (6) so weit, bis er auf der den Werkstückwagen (114, 115; 116, 117) abgewandten Seite des Werkstücks (1; 2) steht. Anschließend heben die Hubvorrichtungen (44) den Zinkenträger (45) und die Zinken (46) an, bis die Zinken (46) über die Förderebene herausragen. Nun kann der Rechen (42) das erste Werkstück (1; 2) in Richtung der Greifeinheiten (131) der Werkstückwagen (114, 115; 116, 117) verschieben, bis das Werkstück (1; 2) zwischen den Klemmbacken (133, 134) liegt. Hierbei wird das Werkstück (1; 2) so ausgerichtet, das die in den Greifeinheiten (131) aufgenommene Werkstücklängsseite (3) in der Längsrichtung (5) der Fertigungszelle (10) orientiert ist.

Auch eine manuelle Beschickung und/oder Ausrichtung des Werkstücks (1; 2) ist denkbar. Hierbei wird das auf den Tragrollen (27) abgelegte Werkstück (1; 2) vom Bediener zu den Werkstückwagen (114, 115; 116, 117) der zur Bearbeitung vorgesehenen Werkstückbahn (11; 12) geschoben.

Nach dem Schließen der Greifeinheiten (131) ziehen die Werkstückwagen (114, 115; 116, 117) das Werkstück (1; 2) entlang der Tragrollen (27) in der Förderrichtung (112), bis das Werkstück (1; 2) an mindestens einem Anschlagzapfen (55; 56) der Werkstückbahn (11; 12) anliegt. Es ist auch denkbar, dass beim Schließen der Greifeinheiten (131) das Werkstück (1; 2) von der Tragrollenbahn (25; 26) um einen geringen Betrag, z.B. weniger als fünf Millimeter, abgehoben wird. Beispielsweise liegt es dann parallel zur Förderebene. Aus der Werkstücklage an der Anschlagvorrichtung (52; 53) und der Lage der Werkstückwagen (114, 115; 116, 117) relativ zum Bett (24) in der Längsrichtung (5) kann die Lage des Werkstücks (1; 2) relativ zu den Werkstückwagen (114, 115; 116, 117) ermittelt werden.

In der Werkzeugmaschine (61) werden beispielsweise mittels freier Werkstückwagen (114, 115; 116, 117) oder mittels Einstellwagen die Lage der Blocksaugergruppen (71; 171) in der Längsrichtung (5) eingestellt. Beim Einsatz von Einstellwagen sind diese beispielsweise so aufgebaut wie die Werkstückwagen (114 - 117), haben jedoch keine Greifeinheit (131). Zum Einstellen der einzelnen Blocksaugergruppe (71; 171) koppelt ein Werkstückwagen (114; 115; 116; 117) mittels der Andocckupplung (141) mit einer Blocksaugergruppe (71; 171). Die Klemmung der Blocksaugergruppe (71; 171) an der Blocksauger-Führungsbahn (66) wird gelöst und der Werkstückwagen (114; 115; 116; 117) verfährt die Blocksaugergruppe (71; 171) werkstückspezifisch in die gewünschte Position. Weiterhin werden diejenigen Saugelemente (76) abgesenkt, die in dem zu bearbeitenden Bereich des Werkstücks (1; 2) liegen. Damit wird beispielsweise eine Beschädigung der Blocksaugergruppe (71; 171) während einer spanabhebenden Bearbeitung des Werkstücks (1; 2) verhindert. Anschließend wird der Werkstückwagen (114; 115; 116; 117) von der Blocksaugergruppe (71; 171) abgekoppelt und die Klemmvorrichtung (75) der Blocksaugergruppe (71; 171) am Maschinenbett (64) aktiviert.

Die Einstellung der Blocksaugergruppen (71; 171) kann auch mittels den das Werkstück (1; 2) fördernden Werkstückwagen (114, 115; 116, 117) erfolgen. Hierzu wird beispielsweise nach dem Ablegen des Werkstücks (1; 2) auf den Stützrollen (85) die Greifeinheit (131) eines Werkstückwagens (114; 115; 116; 117) geöffnet, während mindestens ein anderer Werkstückwagen (115; 114; 117; 116) das Werkstück (1; 2) hält. Mittels des freien Werkstückwagens (114; 115; 116; 117) kann nun eine oder können mehrere der Blocksaugergruppen (71; 171) eingestellt werden. Nach erneutem Klemmen des Werkstücks (1; 2) mittels dieses Werkstückwagens (114; 115; 116; 117) kann ein anderer Werkstückwagen (115; 114; 117; 116) zum Einstellen weiterer Blocksaugergruppen (71; 171) eingesetzt werden.

Die Blocksaugergruppen (71; 171) können auch relativ zum Maschinenbett (64) einzeln verfahrbar sein. Hierzu verfügt beispielsweise jede Blocksaugergruppe (71; 171) über eine Antriebseinheit, die z.B. an einer maschinenbettseitigen Zahnstange abwälzt. Bei einer derartigen Ausführungsform können die Andockkupplungen (141) der Werkstückwagen (114; 115; 116; 117) und die Tragbalkenkupplungen (79) der Blocksaugergruppen (71; 171) entfallen. Beispielsweise erfolgt das Einstellen der Blocksaugergruppen (71; 171) in der Längsrichtung (5) werkstückspezifisch während des Ausrichtens des zu bearbeitenden Werkstücks (1; 2) in der Werkstückbereitstellung (21).

Nach dem Absenken der Anschlagzapfen (55; 56) der ersten Werkstückbahn (11; 12) verfahren die Werkstückwagen (114, 115; 116, 117) das erste Werkstück (1; 2) weiter in der Förderrichtung (112) zur Werkzeugmaschine (61). Hier werden die Werkstückwagen (114, 115; 116, 117) angehalten, sodass das Werkstück (1; 2) auf den Stützrollen (85) an der vorgesehenen Position im jeweiligen Arbeitsbereich (62; 63) der Werkzeugmaschine (61) liegt. Anschließend werden beispielsweise die vorgesehenen Saugelemente (76) angehoben und/oder die Stützrollen (85) abgesenkt, bis das Werkstück (1; 2) auf den vorgesehenen Saugelementen (76) aufliegt. Die Stützrollen (85) werden weiter abgesenkt, bis sie unterhalb des Arbeitsbereichs (62; 63) der Werkzeugeinheiten (91; 101) stehen.

Es ist auch denkbar, nach der Positionierung der Werkstückwagen (114, 115; 116, 117) die Stützrollen (85) anzuheben, sodass nach einem Öffnen der Greifelemente (131) das jeweilige Werkstück (1; 2) auf den Stützrollen (85) liegt. Anschließend werden die Stützrollen (85) mittels der Stützrollen-Hubvorrichtungen (82) abgesenkt, bis sie unterhalb der Stützebene stehen. Hierbei wird das Werkstück (1; 2) auf den Saugelementen (76) abgelegt. Die z.B. höhenverstellbaren Greifeinheiten (131) können hierbei weiterhin das Werkstück (1; 2) halten.

Mittels einer Vakuumpumpe, die auf die vom Werkstück (1; 2) verdeckten und am Werkstück (1; 2) anliegenden Saugnäpfe (78) wirkt, wird das erste Werkstück (1; 2) in der Bearbeitungsposition fixiert. Hierbei werden beispielsweise mit zunehmenden Unterdruck die Hubvorrichtungen der Greifeinheiten (131) abgesenkt. Nach dem Fixieren des Werkstücks (1; 2) mittels der Saugelemente (76) können die Greifeinheiten (131) gegebenenfalls vom Werkstück (1; 2) gelöst werden. Das Werkstück (1; 2) kann nun mittels der Werkzeugeinheiten (92, 102) und des Kantenleimers (104) bearbeitet werden. Hierbei können zur Bearbeitung eines Werkstücks (1; 2) beispielsweise alle an den Bearbeitungsrobotern (91, 101) angeordneten Werkzeugeinheiten (92; 102) und der Kantenleimer (104) eingesetzt werden. Beispielsweise ist es denkbar, das Werkstück (1; 2) in einer Aufspannung komplett zu bearbeiten.

Während der Bearbeitung des ersten Werkstücks (1; 2) kann ein zweites Werkstück (2; 1) bereitgestellt werden. Hierfür werden die Werkstückwagen (116, 117; 114, 115) der zweiten Werkstückbahn (12; 11) eingesetzt. Die Bereitstellung des zweiten Werkstücks (2; 1) erfolgt, wie oben im Zusammenhang mit dem ersten Werkstück (1; 2) beschrieben. Das zweite Werkstück (2; 1) kann bereits während der Bearbeitung des ersten Werkstücks (1; 2) in den Arbeitsbereich (63; 62) verfahren werden. Auch ein anderer Ablauf der Bereitstellung und der Bearbeitung der Werkstücke (1; 2) ist denkbar.

Nach der Bearbeitung des ersten Werkstücks (1; 2) wird die Vakuumpumpe beispielsweise abgeschaltet und der Druck an den Ansaugflächen (77) auf den Umgebungsdruck erhöht. Die Greifelemente (131) greifen das Werkstück (1; 2) oder halten weiterhin das gegriffene Werkstück (1; 2). Die Stützrollen (85) werden angehoben und/oder die Saugelemente (76) werden abgesenkt, bis die Stützebene oberhalb der Saugelemente (76) liegt. Die Werkstückwagen (114, 115; 116,117) verfahren das bearbeitete Werkstück (1; 2) beispielsweise in der zweiten Förderrichtung (113) zur Werkstückentnahme, die im Ausführungsbeispiel im Werkstückbereitstellungsbereich (22; 23) erfolgt. Es ist auch denkbar, das bearbeitete Werkstück (1; 2) in der ersten Förderrichtung (112) weiter z.B. zu einer weiteren Fertigungszelle zu fördern.

Bei Anordnung der Fertigungszelle (10) in einer verketten Fertigung ist es denkbar, die Greifeinheiten (131) während der gesamten Bearbeitung am Werkstück (1; 2) zu halten. Damit kann eine erneute Positionierung des Werkstücks in einer nachfolgenden Fertigungszelle (10) entfallen.

Das erste Werkstück (1) und das zweite Werkstück (2) können auch parallel zueinander bearbeitet werden. Beispielsweise bei identischen Arbeitsgängen können die Bearbeitungsroboter (91, 101) gleich ausgebildete Werkzeugeinheiten (92, 92; 102, 102) aufweisen. In einem derartigen Ausführungsbeispiel können zwei auf den nebeneinanderliegenden Werkstückbahnen (11, 12) liegende Werkstücke (1, 2) zeitlich parallel zueinander mit unterschiedlichen Arbeitsgängen bearbeitet werden.

Das zu bearbeitende Werkstück (1; 2) kann auch breiter als eine einzelne Werkstückbahn (11; 12) sein. Beispielsweise ragt es dann in die andere Werkstückbahn (12; 11) hinein. Die Bearbeitung eines derartigen Werkstücks (1; 2) erfolgt, wie oben beschrieben. Das nachfolgende Werkstück (2; 1) wird in diesem Fall erst dann in den Arbeitsbereich (62; 63) verfahren, wenn das vorhergehende Werkstück (1; 2) beide Arbeitsbereiche (62; 63) verlassen hat.

Gegebenenfalls kann in der Werkstückbereitstellung (21) ein z.B. in einer ersten Aufspannung bearbeitetes Werkstück (1; 2) mittels der Querschubvorrichtung (41) auf die jeweils andere Werkstückbahn (12; 11) verschoben werden, um dort mittels einer weiteren Werkzeugeinheit (92; 102) weiterbearbeitet zu werden.

### Bezugszeichenliste:

- 1: Werkstück, erstes Werkstück
- 2: Werkstück, zweites Werkstück
- 3: Werkstücklängsseite

- 5: Längsrichtung
- 6: Querrichtung
- 7: Höhenrichtung

- 10: Fertigungszelle
- 11: Werkstückbahn, erste Werkstückbahn
- 12: Werkstückbahn, zweite Werkstückbahn

- 21: Werkstückbereitstellung
- 22: Werkstückbereitstellungsbereich
- 23: Werkstückbereitstellungsbereich
- 24: Bett
- 25: Tragrollenbahn
- 26: Tragrollenbahn
- 27: Tragrollen
- 28: Werkstückwagen-Führungsschienen
- 29: Leiterbahnen

- 31: Tragrollenträger
- 32: Querführungen
- 33: Zahnstange

- 41: Querschubvorrichtung
- 42: Rechen
- 43: Querschlitten
- 44: Hubvorrichtung
- 45: Zinkenträger
- 46: Zinken

- 51: Anschlagleiste
- 52: Anschlagvorrichtung
- 53: Anschlagvorrichtung
- 54: Zapfenträger
- 55: Anschlagzapfen
- 56: Anschlagzapfen
- 57: Zylinder, doppeltwirkend

- 61: Werkzeugmaschine
- 62: Arbeitsbereich
- 63: Arbeitsbereich
- 64: Maschinenbett
- 65: Werkstücktisch
- 66: Blocksauger-Führungsbahnen
- 67: Werkstückwagen-Führungsschienen

- 71: Blocksaugergruppe
- 72: Tragbalken
- 73: Führungsgruppen
- 74: Führungsschuhe
- 75: Klemmvorrichtung
- 76: Saugelemente
- 77: Ansaugfläche
- 78: Saugnapf
- 79: Tragbalkenkupplung

- 81: Stützvorrichtung
- 82: Hubvorrichtung
- 83: Hubzylinder
- 84: Führungszylinder
- 85: Stützrolle
- 86: Stützträger

- 91: Bearbeitungsroboter
- 92: Werkzeugeinheit, Bohr- und Fräsaggregat
- 93: Schwenkkopf
- 94: Werkzeug, Bohrwerkzeug

- 101: Bearbeitungsroboter
- 102: Werkzeugeinheit, Verleimagggregat
- 103: Schwenkkopf
- 104: Kantenleimer

- 111: Fördervorrichtung
- 112: Förderrichtung, erste Förderrichtung
- 113: zweite Förderrichtung
- 114: Werkstückwagen
- 115: Werkstückwagen
- 116: Werkstückwagen
- 117: Werkstückwagen
- 118: Gehäuse

- 121: Führungseinheit
- 122: Kugelumlaufschuh

- 125: Antriebseinheit
- 126: Energie- und Signalversorgung
- 127: Antriebsräder

- 131: Greifeinheit
- 132: Parallelgreifvorrichtung
- 133: Klemmbacke, oben
- 134: Klemmbacke, unten

- 141: Andockkupplung
- 142: Stößel
- 143: Stecker

- 165: Werkstücktisch

- 171: Blocksaugergruppe

## Patentansprüche

1. Fertigungszelle (10) mit einer Werkstückbereitstellung (21), mit einer mit dieser verbundenen Werkzeugmaschine (61) und mit mindestens einer einen Werkstückbereitstellungsbereich (22; 23) der Werkstückbereitstellung (21) und einen Werkstücktisch (65; 165) der Werkzeugmaschine (61) aufweisenden Werkstückbahn (11; 12), wobei die Werkzeugmaschine (61) mindestens zwei Bearbeitungsroboter (91, 101) aufweist und wobei der Werkstücktisch (65; 165) mindestens eine Blocksaugergruppe (71; 171) umfasst, **dadurch gekennzeichnet,**
- **dass** die Fertigungszelle (10) eine zweite, in einer Längsrichtung (5) der Fertigungszelle (10) und parallel zur ersten Werkstückbahn (11; 12) verlaufende zweite Werkstückbahn (12; 11) mit einem zweiten, mindestens eine zweite Blocksaugergruppe (171; 71) umfassenden zweiten Werkstücktisch (165; 65) aufweist,
- **dass** jede Blocksaugergruppe (71; 171) zur werkstückspezifischen Anordnung in der Längsrichtung (5) der Fertigungszelle (10) verfahrbar ist.
- **dass** die einzelne Blocksaugergruppe (71; 171) mindestens zwei Saugelemente (76) aufweist, die einzeln in einer Höhenrichtung (7) verfahrbar sind und
- **dass** die einzelne Blocksaugergruppe (71; 171) einen Tragbalken (72) hat, an dem eine Stützvorrichtung (82) mit einer eine querliegende Stützrolle (85) tragenden Hubvorrichtung (82) angeordnet ist.

2. Fertigungszelle (10) nach Anspruch 1, **dadurch gekennzeichnet, dass** jedes Saugelement (76) pneumatisch und einzeln mit Unterdruck beaufschlagbar ist.

3. Fertigungszelle (10) nach Anspruch 1, **dadurch gekennzeichnet, dass** jeder Bearbeitungsroboter (91; 101) eine Werkzeugeinheit (92; 102) trägt, wobei mindestens eine Werkzeugeinheit (92; 102) Werkzeuge (94) zur spanenden Bearbeitung hat.

4. Fertigungszelle (10) nach Anspruch 3, **dadurch gekennzeichnet, dass** mindestens ein Werkzeug (94) ein Bohrwerkzeug (94) ist.

5. Fertigungszelle (10) nach Anspruch 1, **dadurch gekennzeichnet, dass** die Werkstückbereitstellung (21) pro Werkstückbahn (11; 12) mindestens eine absenkbare oder abkippbare Anschlagvorrichtung (52; 53) hat.

6. Fertigungszelle (10) nach Anspruch 1, **dadurch gekennzeichnet, dass** beide Werkstückbereitstellungsbereiche (22, 23) eine gemeinsame, absenkbare Querschubvorrichtung (41) aufweisen.

7. Fertigungszelle (10) nach Anspruch 1, **dadurch gekennzeichnet, dass** jeder Werkstückbahn (11; 12) mindestens ein in Längsrichtung (5) verfahrbarer Werkstückwagen (114, 115; 116, 117) zugeordnet ist, der jeweils eine Greifeinheit (131) zum Greifen eines Werkstücks (1; 2) und eine Führungseinheit (121) zum Führen entlang der Fertigungszelle (10) aufweist.

8. Fertigungszelle (10) nach Anspruch 7, **dadurch gekennzeichnet, dass** die jeweilige Greifeinheit (131) relativ zur Führungseinheit (121) in der Höhenrichtung (7) verstellbar ist.

## Claims

1. A production cell (10) having a workpiece-providing system (21), a machine tool (61) connected thereto, and at least one workpiece track (11; 12), which has a workpiece-providing region (22; 23) of the workpiece-providing system (21) and a workpiece table (65; 165) of the machine tool (61), wherein the machine tool (61) has at least two machining robots (91, 101), and wherein the workpiece table (65; 165) comprises at least one block sucker group (71; 171), **characterised in that**
- the production cell (10) has a second workpiece track (12; 11), which runs in a longitudinal direction (5) of the production cell (10) and parallel to the first workpiece track (11; 12) and has a second workpiece table (165; 65), which comprises at least one second block sucker group (171; 71),
- each block sucker group (71; 171) is movable in the longitudinal direction (5) of the production cell (10) for workpiece-specific arrangement,
- the individual block sucker group (71; 171) has at least two suction elements (76), which are individually movable in a vertical direction (7), and
- the individual block sucker group (71; 171) has a supporting beam (72), on which a supporting device (72) with a lifting device (82) bearing a transverse supporting roller (85) is arranged.

2. The production cell (10) according to Claim 1, **characterised in that** a vacuum can be applied pneumatically and individually to each suction element (76).

3. The production cell (10) according to Claim 1, **characterised in that** each machining robot (91; 101) bears a tool unit (92; 102), wherein at least one tool unit (92; 102) has tools (94) for machining.

4. The production cell (10) according to Claim 3, **characterised in that** at least one tool (94) is a drilling tool (94).

5. The production cell (10) according to Claim 1, **characterised in that** the workpiece-providing system (21) has at least one lowerable or tiltable stop device (52; 53) per workpiece track (11; 12).

6. The production cell (10) according to Claim 1, **characterised in that** both workpiece-providing regions (22, 23) have a common, lowerable transverse pushing device (41).

7. The production cell (10) according to Claim 1, **characterised in that** each workpiece track (11; 12) is assigned at least one workpiece carriage (114, 115; 116, 117), which is movable in the longitudinal direction (5) and has a gripping unit (131) for gripping a workpiece (1; 2) and a guiding unit (121) for guiding along the production cell (10).

8. The production cell (10) according to Claim 7, **characterised in that** each gripping unit (131) is adjustable in the vertical direction (7) relative to the guiding unit (121).

## Revendications

1. Cellule de production (10), pourvue d'une mise à disposition (21) de pièces à usiner, avec une machine-outil (61) reliée avec celle-ci et pourvue d'au moins une voie (11 ; 12) de pièces à usiner, comportant une zone (22 ; 23) de mise à disposition de pièces à usiner de la mise à disposition (21) de pièces à usiner et d'une table porte-pièces (65 ; 165) de la machine-outil (61), la machine-outil (61) comportant au moins deux robots d'usinage (91, 101) et la table porte-pièces (65; 165) comprenant au moins un groupe (71 ; 171) de blocs d'aspiration, **caractérisée**
- **en ce que** la cellule de production (10) comporte une deuxième voie (12 ; 11) de pièces à usiner, s'écoulant dans une direction longitudinale (5) de la cellule de production (10) et à la parallèle de la première voie (11 ; 12) de pièces à usiner, pourvue d'une deuxième table porte-pièces (165 ; 65) comprenant au moins un deuxième groupe (171 ; 71) de blocs d'aspiration,
- **en ce que** chaque groupe (71 ; 171) de blocs d'aspiration est déplaçable pour être placé de manière spécifique à la pièce à usiner dans la direction longitudinale (5) de la cellule de production (10),
- **en ce que** le groupe (71 ; 171) individuel de blocs d'aspiration comporte au moins deux éléments aspirants (76), qui sont déplaçables individuellement dans un sens de la hauteur (7) et
- **en ce que** le groupe (71 ; 171) individuel de blocs d'aspiration dispose d'une poutre de support (72), sur laquelle est placé un dispositif d'appui (82), pourvu d'un dispositif de levage (82) portant un rouleau d'appui (85) situé à la transversale.

2. Cellule de production (10) selon la revendication 1, **caractérisée en ce que** chaque élément aspirant (76) peut être soumis pneumatiquement et individuellement à une dépression.

3. Cellule de production (10) selon la revendication 1, **caractérisée en ce que** chaque robot d'usinage (91 ; 101) porte une unité d'outils (92 ; 102), au moins une unité d'outils (92 ; 102) disposant d'outils (94) pour l'usinage par enlèvement de copeaux.

4. Cellule de production (10) selon la revendication 3, **caractérisée en ce qu'**au moins un outil (94) est un outil de perçage (94).

5. Cellule de production (10) selon la revendication 1, **caractérisée en ce que** la mise à disposition (21) de pièces à usiner dispose pour chaque voie (11 ; 12) de pièces à usiner d'au moins un dispositif de butée (52 ; 53) abaissable ou basculable vers le bas.

6. Cellule de production (10) selon la revendication 1, **caractérisée en ce que** les deux zones (22, 23) de mise à disposition de pièces à usiner comportent un dispositif de poussée transversale (41) commun abaissable.

7. Cellule de production (10) selon la revendication 1, **caractérisée en ce qu'**à chaque voie (11 ; 12) de pièces à usiner est associé au moins un chariot porte-pièces (114, 115 ; 116, 117) déplaçable dans la direction longitudinale (5), dont chacun comporte une unité de préhension (131), destinée à prendre une pièce à usiner (1 ; 2) et d'une unité de guidage (121), pour le guidage le long de la cellule de production (10).

8. Cellule de production (10) selon la revendication 7, **caractérisée en ce que** l'unité de préhension (131) respective est ajustable dans le sens de la hauteur (7) par rapport à l'unité de guidage (121).
